# EUROPÄISCHE PATENTSCHRIFT

(11) **EP 2 177 743 B1**
(45) Veröffentlichungstag und Bekanntmachung des Hinweises auf die Patenterteilung: **09.09.2020**
(21) Anmeldenummer: 09012609.5
(22) Anmeldetag: 06.10.2009
(51) Int. Cl.: F02M 31/04, F02N 19/06

(54) **Brennkraftmaschine mit einer Flammstartanlage**
Internal combustion engine with a flame ignition device
Moteur à combustion interne avec une installation d'allumage de flamme

(30) Priorität: 18.10.2008 DE 102008052309
(43) Veröffentlichungstag der Anmeldung: 21.04.2010
(73) Patentinhaber: MAN Truck & Bus SE, 80995 München (DE)
(72) Erfinder: Kalass, Rainer, 91189 Rohr (DE); Harres, Ulrich, 90441 Nürnberg (DE); Kautzmann, André, 90425 Nürnberg (DE); Ernst, Robert, 85258 Weichs (DE)
(74) Vertreter: Liebl, Thomas

(56) Entgegenhaltungen:
- EP-A2- 0 603 796
- DE-A1- 2 324 841
- DE-A1- 4 032 758
- DE-B3-102006 044 346
- US-A- 4 169 448
- MICHAEL BENDER: "Cost Effective LIN Bus Automotive Networking Microcontroller", SAE TECHNICAL PAPERS, 8 March 2004 (2004-03-08), pages 1-6, XP055455623, United States DOI: https://doi.org/10.4271/2004-01-1742

## Beschreibung

Die vorliegende Erfindung bezieht sich auf eine Brennkraftmaschine und insbesondere auf eine Brennkraftmaschine wie einen Dieselmotor, der in Nutzfahrzeugen Anwendung findet. Derartige Brennkraftmaschinen weisen im Stand der Technik oftmals sogenannte Flammstartanlagen auf. Diese Flammstartanlagen dienen dazu, um bei einem Kaltstart des Fahrzeuges die zugeführte Luft zu erwärmen, um auf diese Weise negative Einflüsse durch den noch kühlen Motorblock zu vermeiden.

Aus der EP 0 809 021 B1 sind ein Verfahren und eine Vorrichtung zur Steuerung des Glühvorganges einer Glühkerze eines Dieselmotors bekannt. Bei diesem Verfahren wird einer Glühkerze eine elektrische Aufheizleistung zugeführt. Insbesondere für die Anwendung in Nutzfahrzeugen ist es jedoch teilweise günstiger, anstelle elektrisch betriebener Glühkerzen brennstoffbetriebene Elemente, die im folgenden auch als Flammstartanlagen bezeichnet werden, zu verwenden.

Die DE 102 03 766 A1 beschreibt eine elektronische Motorregelung. Dabei ist eine elektronische Regeleinrichtung zur Steuerung verschiedener Parameter einer ein- oder mehrzylindrischen selbstzündenden Brennkraftmaschine vorgesehen. Weiterhin können hierbei auch Kaltstarthilfseinrichtungen verwaltet werden. In diesem Dokument wird jedoch der Betrieb der Kaltstartanlage nicht im Detail erörtert.

Aus der gattungsbildenden EP 0 603 796 A2 ist eine Flammstartanlage für eine Verbrennungseinrichtung zum Vorwärmen der Verbrennungsluft bekannt, bei der diverse Sensoren zur Überwachung der Flammstartanlage vorgesehen sind, so zum Beispiel ein Glühelement-Überwachungssensor, der die Temperatur des Glühelements der Flammglühkerze überwacht und einer Überwachungseinrichtung meldet, und ein Flammüberwachungssensor, der die Ausbildung der Flamme der Flammglühkerze überwacht und ein entsprechendes Signal an die Überwachungseinrichtung überträgt.

Die DE 10 2005 005 280 A1 beschreibt eine Vorrichtung und ein Verfahren zum Erfassen des Drucks in einem Brennraum einer Brennkraftmaschine. Dabei wird auch hier eine Brennkraftmaschine beschrieben, welche einen Glühstift aufweist.

Aus der DE 10 2006 044 346 B3 ist eine Brennkraftmaschine mit einem elektronischen Leistungsmodul bekannt. In diesem Dokument wird auch eine Ansteuerung für einen Flammstart dargestellt. Weiterhin wird in dieser Druckschrift ein Leistungsmodul beschrieben, das an einem Kurbelgehäuse der Brennkraftmaschine angeordnet ist und in dem Schaltmittel zur Aktivierung oder Deaktivierung der Verbraucher und Überwachungsmittel zur Überwachung der Verbraucher angeordnet sind.

Es ist weiterhin aus dem Stand der Technik bekannt, zum Schalten einer Flammglühkerze ein herkömmliches Relais zu verwenden, welches dabei typischerweise fahrzeugfest angebracht ist. Dieses Relais wird durch den zentralen Bordrechner (ZBR) angesteuert. Dies führt zu einer dezentralen Anordnung von Relais und zentralem Bordrechner im Fahrerhaus und Flammglühkerze am Motor. Dadurch ergeben sich lange Leitungen bis zur entsprechenden elektrischen Last. Hierdurch entstehen wiederum hohe Kosten, vor allem bei der Verwendung von Leitungen mit großem Querschnitt vom Relais zu der Flammglühkerze. Weiterhin sind bei dieser Vorgehensweise auch Überwachungs- und Diagnosemöglichkeiten weiterer Lasten bzw. des Systems Flammstartanlage (FSA) nur eingeschränkt möglich. Eine Leistungsregelung der Flammglühkerze (FGK) erfolgt derzeit durch eine Pulsweitenmodulation (PWM), was sich wiederum durch die begrenzte Zyklenzahl eines Relais negativ auf dessen Lebensdauer auswirkt.

Der vorliegenden Erfindung liegt die Aufgabe zugrunde, Ansteuerungsmöglichkeiten für eine Flammstartanlage zu verbessern. Weiterhin sollen auch Diagnose- und Überwachungsmöglichkeiten für eine derartige Flammstartanlage erweitert bzw. verbessert werden.

Dies wird erfindungsgemäß durch eine Brennkraftmaschine nach Anspruch 1 erreicht. Vorteilhafte Ausführungsformen und Weiterbildungen sind Gegenstand der Unteransprüche.

Eine erfindungsgemäße Brennkraftmaschine weist eine Vielzahl von beweglichen Arbeitselementen auf sowie eine Zuführleitung, welche den Arbeitselementen ein gasförmiges Medium zuführt. Weiterhin ist in der Zuführleitung wenigstens teilweise ein Brennelement angeordnet, welches das zuzuführende gasförmige Medium wenigstens zeitweise mit Hilfe einer Flamme erwärmt sowie eine Kraftstoffleitung, welche dem Brennelement einen Kraftstoff zum Betrieb desselben zuführt. Weiterhin ist eine steuerbare Ventileinrichtung vorgesehen, welche die Zuführung des Kraftstoffes an das Brennelement steuert sowie eine Steuereinrichtung zum Steuern dieser Ventileinrichtung. Erfindungsgemäß weist die Brennkraftmaschine ein elektronisches Relais zum Steuern der Ventileinrichtung bzw. eine elektronische Schalteinrichtung auf und die Brennkraftmaschine weist weiterhin wenigstens eine Sensoreinrichtung auf, welche die Funktion des Brennelements überprüft. Unter einem elektronischen Relais wird ein Relais verstanden, welches im Gegensatz zu einem klassischen Relais keine beweglichen Elemente aufweist

Bei dem gasförmigen Medium handelt es sich insbesondere um Luft, die den Arbeitselementen, das heißt den Zylindern des Motors, für den Arbeitsbetrieb zugeführt wird. Das Brennelement dient in einer Kaltstartphase zur Erwärmung dieses gasförmigen Mediums, um auf diese Weise, wie oben erwähnt, Defizite durch den kalten Motorblock auszugleichen.

Zu diesem Zweck ist es möglich, dem Brennelement einen Kraftstoff, gegebenenfalls den gleichen Kraftstoff, der auch zum Betrieb des Motors nötig ist, zuzuführen, um mit Hilfe einer Flamme die Luft zu erwärmen.

Anstelle des im Stand der Technik verwendeten herkömmlichen (mechanisch arbeitenden) Relais wird erfindungsgemäß ein elektronisches Relais verwendet, welches einen Controller für die LIN-Kommunikation (Local Interconnection Network) mit dem Motorsteuergerät und zum Ansteuern der Endstufen für die Lasten aufweist.

Durch diese elektronische Ausführung werden, wie gesagt, die Diagnosemöglichkeiten für die Flammstartanlage erweitert. So kann mittels einer Sensoreinrichtung die Funktion der Flammstartanlage überwacht werden. Weiterhin ist eine Integration des Magnetventils in die Steuereinrichtung bzw. in das elektronische Relais denkbar.

Dabei kann beispielsweise der Durchfluss von Brennstoff zu dem Brennelement überwacht werden. Bevorzugt stellt die Sensoreinrichtung das Vorhandensein der Flamme an dem Brennelement fest.

Erfindungsgemäß weist das elektronische Relais bzw. die Steuereinrichtung dabei eine Vielzahl von Halbleiterbauelementen auf. So weist die Steuereinrichtung insbesondere auch eine halbleiterbasierte Endstufe zum Ansteuern der Ventileinrichtung auf, wobei auf diese Weise auch die Diagnosemöglichkeiten für die Steuereinrichtung verbessert werden. Die Sensoreinrichtung stellt dabei erfindungsgemäß das Vorhandensein der Flamme mittelbar über eine Temperaturdifferenz vor und nach der besagten Flamme fest. Es wäre auch möglich, das Vorhandensein einer Flamme direkt, beispielsweise mit optischen Mitteln zu detektieren. Bei einer weiteren vorteilhaften Ausführungsform ist die Ventileinrichtung ein Magnetventil. Ein derartiges Magnetventil kann in besonders einfacher Weise von den besagten halbleiterbasierten Endstufen angesteuert werden. Weiterhin ist eine Integration des Magnetventils in die Steuereinrichtung bzw. das elektronische Relais denkbar.

Erfindungsgemäß weist die Sensoreinrichtung zwei Temperaturmesseinrichtungen auf, wobei eine Temperaturmesseinrichtung in der Strömungsrichtung des gasförmigen Mediums stromaufwärts bezüglich des Brennelements, und die andere Temperaturmesseinrichtung in der Strömungsrichtung des gasförmigen Mediums stromabwärts bezüglich des Brennelementes angeordnet ist. Damit ist hier, bevorzugt in Kombination mit dem Motorsteuergerät eine Überwachung möglich, ob die Flamme vorhanden ist. Dabei erhält das Motorsteuergerät beziehungsweise die Steuereinrichtung erfindungsgemäß Informationen von den beiden besagten Temperatursensoren vor und nach der Flammglühkerze. Aus dem Auswerten dieser Temperaturdifferenz lässt sich auf ein Vorhandensein der Flamme, gegebenenfalls auch auf eine Intensität der Flamme, schließen.

Bei einer weiteren vorteilhaften Ausführungsform weist die Brennkraftmaschine wenigstens eine Messeinrichtung auf, welche eine Temperatur wenigstens eines Bereichs des Brennelements bestimmt. Bei dieser Messeinrichtung kann es sich beispielsweise um ein sogenanntes PTC-Element oder ein Element mit PTC - Charakteristik handeln, welches in das Brennelement integriert ist. Auf diese Weise ist beispielsweise eine Überprüfung möglich, ob bei einer eingeschalteten Ventileinrichtung wie einem eingeschalteten Magnetventil Kraftstoff fließt.

In einem Normalzustand, wobei bei einer geöffneten Ventileinrichtung über die Flammglühkerze Kraftstoff fließt, nimmt diese durch seine Wärmekapazität einen Teil der Wärme auf. Dies hat zur Folge, dass die Flammglühkerze etwas abkühlt, wodurch ein entsprechender Flammglühkerzenwiderstand (mit PTC-Charakteristik) sinkt. In der Folge fließt wiederum mehr Glühstrom durch die Flammglühkerze. Anhand des steigenden Glühstroms bei geöffnetem Magnetventil lässt sich auf diese Weise rückschließen, ob Kraftstoff fließt.

Anstelle dieser Strommessung wäre es jedoch auch möglich, in der Kraftstoffleitung Durchflusssensoren vorzusehen. Bei einer weiteren vorteilhaften Ausführungsform misst die besagte Messeinrichtung eine elektrische Größe, wie insbesondere einen Strom. Es wäre jedoch auch möglich, andere elektrische Größen, wie beispielsweise Spannungen oder Widerstände, zu messen.

Erfindungsgemäß ist das elektronische Relais in die Busarchitektur des Motorsteuergeräts der Brennkraftmaschine integriert. So ist es möglich, die besagte Steuereinrichtung insbesondere motorseitig in die Motorsteuerung zu integrieren. Dabei steht, wie oben erwähnt, die Steuereinrichtung in Kommunikation mit der Steuereinheit der Brennkraftmaschine über eine LIN-Kommunikation. Denkbar wäre sowohl eine hardwaremäßige Integration als auch ein gemeinsamer Verbund der Komponenten in einem Netzwerk.

Bei einer weiteren vorteilhaften Ausführungsform weist die Brennkraftmaschine wenigstens eine weitere Messeinrichtung auf, welche elektrische Lasten detektiert. Grundsätzlich sind durch die Verwendung eines elektronischen Relais Überwachungsfunktionen der Lasten durch einen Mikrocontroller sowie daraus ableitbare Diagnosen möglich.

Neben der oben erwähnten Diagnose, ob Kraftstoff fließt, ist es auch möglich, jeweils an der Steuereinrichtung angeschlossene Lasten zu überprüfen und möglicherweise defekte Lasten, beziehungsweise elektrische Verbraucher auch dann festzustellen, wenn die Flammstartanlage inaktiv ist, beispielsweise im Sommerbetrieb.

Damit ist auch eine Diagnose ohne Betrieb mit Glühstrom und mit Bestromung des Magnetventils möglich. Dabei ist es möglich, ein geeignetes Messnetzwerk gezielt an die oben erwähnten Endstufen zuzuschalten und anschließend die jeweils anliegenden Spannungspegel zu messen, um auf diese Weise eine Diagnose über die Zustände der Lasten bzw. Verbraucher durchzuführen.

So ist beispielsweise auch eine umgehende Erkennung einer defekten Flammglühkerze oder eines defekten Magnetventils möglich sowie ein Auswechseln vor dem eigentlichen Einsatz, so dass der Einsatz bzw. die Einsatzbereitschaft der Flammstartanlage stets gewährleistet bleibt. Weiterhin können beispielsweise auch Kurzschlüsse nach der Masse bzw. der Batteriespannung erkannt werden.

Denkbar wäre auch eine Bordspannungsüberwachung aufgrund derer die PWM - Ansteuerung der Flammglühkerze immer optimal, d.h. lebensdauerschonend, erfolgen kann. Daneben könnte auch eine Stromüberwachung der Magnetventile erfolgen bzw. auch eine entsprechend verschleißfreie PWM-Ansteuerung der Magnetventile. Die oben erwähnte Überwachung, ob eine Flamme vorhanden ist, wird bevorzugt in Kombination mit einem Motorsteuergerät möglich.

Weiterhin wäre es auch möglich, eine Durchlegierung einer Flammglühkerzenendstufe festzustellen. Wenn eine derartige Endstufe unter Dauerstrom steht, kann es zu einem sog. Durchlegieren und in der Folge zu Kurzschlüssen kommen. Weiterhin sind durch Feststellen der Lastwiderstände Aussagen über ein Driften dieser Lastwiderstände möglich und dabei auch Aussagen über deren Lebensdauer, so dass auch hier ein vorzeitiges Auswechseln möglich wäre. Bevorzugt wäre dabei die besagte Diagnose durch LIN an das Motorsteuergerät übermittelt und kann dabei auch mit weiteren Daten zur Motorsteuerung verknüpft werden.

Weiterhin ist bevorzugt eine Einrichtung zur Messung eines Magnetventilspulenstroms vorgesehen, sowie besonders bevorzugt auch eine entsprechende Pulsweitenmodulationsansteuerung des Magnetventils. Auf diese Weise kann auch eine Kraftstoffdosierung und so ein Einstellen der zugeführten Heizenergie erreicht werden. Genauer kann die zugeführte Heizleistung den Umgebungsbedingungen und den Betriebsbedingungen des Motors angepasst werden.

Erfindungsgemäß ist das elektronische Relais motorfest verbaut, das heißt nicht, wie im Stand der Technik, fahrzeugfest angeordnet. Auf diese Weise ist die Einsparung von Leitungen möglich, da das Schalten der Lasten über den oben erwähnten LIN-Bus umgesetzt wird, und deshalb nicht jede Endstufe separat angesprochen wird. Weiterhin ist über ein spezielles Diagnosewerkzeug ein Stellgliedtest möglich.

Die vorliegende Erfindung ist weiterhin auf ein Kraftfahrzeug und insbesondere ein Nutzfahrzeug mit einer Brennkraftmaschine der oben beschriebenen Art gerichtet.

Erfindungsgemäß wird das Vorhandensein der Flamme mittelbar über eine Temperaturdifferenz des gasförmigen Mediums vor und nach diesem Brennelement überprüft.

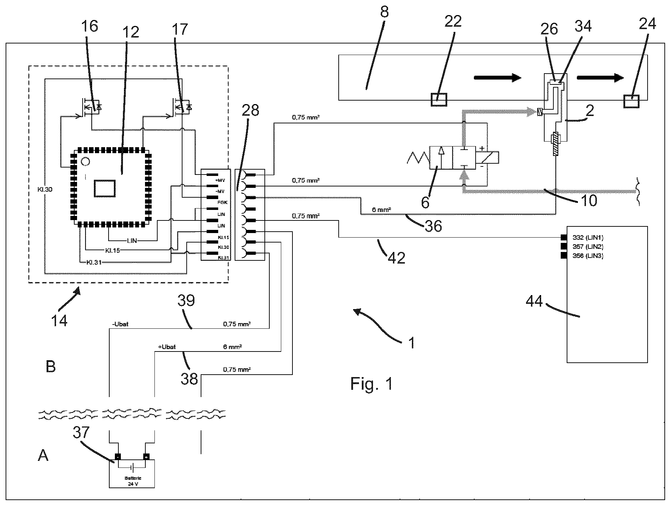

Weitere vorteilhafte Ausführungsformen ergeben sich aus der beigefügten Zeichnung:
Darin zeigt Fig. 1 eine schematische Darstellung einer erfindungsgemäßen Vorrichtung.

Eine nicht gezeigte Vorrichtung nach dem Stand der Technik weist fahrzeugseitig einen zentralen Bordrechner auf. Zur Schaltung des motorseitig angeordneten Magnetventils wird eine Endstufe im zentralen Bordrechner verwendet. Ferner ist eine Flammglühkerze und eine Kraftstoffleitung vorgesehen. Durch diese Vorgehensweise sind vergleichsweise lange elektrische Verbindungsleitungen und damit ein hoher Verkabelungsaufwand zwischen dem zentralen Bordrechner und den Magnetventilen nötig. Weiterhin ist eine Sicherung vor dem Relais im Lastpfad vorgesehen. Das Bezugszeichen in Fig. 1 bezieht sich auf eine Fahrzeugseite eines Fahrzeugs und das Bezugszeichen B auf eine Motorseite.

Fig. 1 zeigt schematisch eine Darstellung zur Veranschaulichung einer erfindungsgemäßen Vorrichtung bzw. einen Teil einer Brennkraftmaschine 1. Dabei ist eine Zuführleitung 8 in Form eines Ansaugrohrs vorgesehen, welches dem Motor Luft zur Verbrennung zuführt. Innerhalb dieser Zuführleitung ist ein Brennelement 2 in Form einer Flammglühkerze vorgesehen. Dieser Flammglühkerze wird mit Hilfe einer Kraftstoffleitung 10 Kraftstoff für die Verbrennung zugeführt. Die Kraftstoffzufuhr wird dabei durch ein Magnetventil 6 gesteuert.

Das Magnetventil 6 wiederum ist mit elektrischen Leitungen über eine Schnittstelle 28 mit einem in seiner Gesamtheit mit 14 bezeichneten elektronischen Relais verbunden. Dieses elektronische Relais 14 weist eine Steuereinrichtung 12 bzw. einen Mikrocontroller 12 auf. Das Bezugszeichen 16 bezieht sich auf eine Endstufe zum Ansteuern des Magnetventils 6. Eine weitere Endstufe 17 ist vorgesehen, um die Flammglühkerze anzusteuern, beispielsweise zur Initialisierung eines Brennvorgangs. Dabei ist es auch möglich, einem Glühelement 34 des Brennelements 2 einen Glühstrom zuzuführen, wobei hierzu eine Verbindungsleitung 36 vorgesehen ist. Über Zuführungsleitungen 38, 39 wird die Steuereinrichtung 12 von einer Batterie 37 mit Strom versorgt. Anders als in Fig. 1 gezeigt, wäre es auch möglich, das Magnetventil 6 in das elektronische Relais 14 zu integrieren. Das Glühelement 34 kann dabei auch als Messeinrichtung 26 fungieren, um aus einem gemessenen Strom festzustellen, ob Kraftstoff über die Leitung 10 fließt.

Das Bezugszeichen 42 bezieht sich auf eine Verbindungsleitung, über welche die Steuereinrichtung 12 mit einem Motorsteuergerät 44 kommuniziert. Die Bezugszeichen 22, 24 beziehen sich auf zwei Sensoreinrichtungen, welche eine Temperatur des gasförmigen Mediums vor und nach der Flammglühkerze ermitteln. Durch die erfindungsgemäße Ausführung ist es daher möglich, Kabelverbindungen einzusparen, da alle Verbindungsleitungen zwischen den Steuerungseinrichtungen, der Flammstartanlage und den Magnetventilen motorseitig angeordnet werden können.

### Bezugszeichenliste

- 1: Vorrichtung bzw. Teil einer Brennkraftmaschine
- 2: Flammglühkerze, Brennelement
- 6: Magnetventil
- 8: Zuführleitung
- 10: Kraftstoffleitung
- 12: Mikrocontroller bzw. Steuereinrichtung
- 14: elektronisches Relais
- 16: Endstufe
- 17: Endstufe
- 28: Schnittstelle
- 36: Verbindungsleitung
- 38, 39: Verbindungsleitung
- 22, 24: Sensoreinrichtung
- 42: Verbindungsleitung
- 44: Motorsteuergerät
- A: Fahrzeugseite
- B: Motorseite

## Patentansprüche

1. Brennkraftmaschine (1) mit einer Vielzahl von beweglichen Arbeitselementen und wenigstens einer Zuführleitung (8), welche den Arbeitselementen ein gasförmiges Medium zuführt, mit einem wenigstens teilweise in der Zuführleitung (8) angeordneten Brennelement (2), welches das zuzuführende gasförmige Medium wenigstens zeitweise mit Hilfe einer Flamme erwärmt, mit einer Kraftstoffleitung (10), welche dem Brennelement (2) einen Kraftstoff zum Betrieb des Brennelements (2) zuführt, mit einer steuerbaren Ventileinrichtung (6), welche die Zuführung des Kraftstoffes an das Brennelement (2) steuert, und mit einer Steuereinrichtung (12) zum Steuern der Ventileinrichtung (6), wobei die Brennkraftmaschine (1) wenigstens eine Sensoreinrichtung (22, 24) aufweist, welche eine Funktion des Brennelements (2) überprüft, wobei die Sensoreinrichtung (22, 24) derart gestaltet ist, dass sie ein Vorhandensein der Flamme an dem Brennelement (2) feststellt, **dadurch gekennzeichnet, dass** die Brennkraftmaschine (1) ein motorfest verbautes elektronisches Relais (14) zum Steuern der Ventileinrichtung (6) aufweist, wobei das eine Vielzahl von Halbeiterbauelementen (12, 16, 17) aufweisende elektronische Relais (14) als Steuereinrichtung (12) einen Controller für die LIN-Kommunikation mit einem Motorsteuergerät (44) und zum Ansteuern von Endstufen aufweist, wobei die Endstufen eine halbleiterbasierte Endstufe (16) zum Ansteuern der Ventileinrichtung (6) und eine halbleiterbasierte Endstufe (17) zum Ansteuern des Brennelementes (2) sind, und dass die Sensoreinrichtung (22, 24) zwei Temperaturmesseinrichtungen (22, 24) aufweist, wobei eine Temperaturmesseinrichtung (22) in der Strömungsrichtung des gasförmigen Mediums stromaufwärts bezüglich des Brennelements (2) und die andere Temperaturmesseinrichtung (24) in der Strömungsrichtung des gasförmigen Mediums stromabwärts bezüglich des Brennelements (2) angeordnet ist und wobei die Sensoreinrichtung (22, 24) das Vorhandensein der Flamme mittelbar über eine Temperaturdifferenz vor und nach der besagten Flamme feststellt.

2. Brennkraftmaschine (1) nach wenigstens einem der vorangegangenen Ansprüche, **dadurch gekennzeichnet, dass** die Ventileinrichtung (6) ein Magnetventil (6) ist.

3. Brennkraftmaschine (1) nach wenigstens einem der vorangegangenen Ansprüche, **dadurch gekennzeichnet, dass** die Brennkraftmaschine (1) wenigstens eine Messeinrichtung (26) aufweist, welche eine Temperatur wenigstens eines Bereichs des Brennelements (2) bestimmt.

4. Brennkraftmaschine (1) nach Anspruch 3, **dadurch gekennzeichnet, dass** die Messeinrichtung (26) eine elektrische Größe misst.

5. Brennkraftmaschine (1) nach wenigstens einem der vorangegangenen Ansprüche, **dadurch gekennzeichnet, dass** die Brennkraftmaschine eine weitere Messeinrichtung aufweist, welche elektrische Lasten detektiert.

6. Kraftfahrzeug und insbesondere Nutzfahrzeug mit einer Brennkraftmaschine nach wenigstens einem der vorangegangenen Ansprüche.

## Claims

1. Internal combustion engine (1) having a multiplicity of movable working elements and having at least one feed line (8) which feeds a gaseous medium to the working elements, having a combustion element (2) which is arranged at least partially in the feed line (8) and which, by means of a flame, at least intermittently heats the gaseous medium to be fed, having a fuel line (10) which feeds a fuel for the operation of the combustion element (2) to the combustion element (2), having a controllable valve device (6) which controls the feed of the fuel to the combustion element (2), and having a control device (12) for controlling the valve device (6), wherein the internal combustion engine (1) has at least one sensor device (22, 24) which monitors a function of the combustion element (2), wherein the sensor device (22, 24) is designed so as to detect a presence of the flame at the combustion element (2), **characterized in that** the internal combustion engine (1) has an electronic relay (14) which is installed fixedly on the engine and which serves for controlling the valve device (6), wherein the electronic relay (14), which has a multiplicity of semiconductor components (12, 16, 17), has, as a control device (12), a controller for LIN communication with an engine control unit (44) and for actuating output stages, wherein the output stages are a semiconductor-based output stage (16) for the actuation of the valve device (6) and a semiconductor-based output stage (17) for the actuation of the combustion element (2), and **in that** the sensor device (22, 24) has two temperature measuring devices (22, 24), wherein one temperature measuring device (22) is arranged upstream of the combustion element (2) in the flow direction of the gaseous medium and the other temperature measuring device (24) is arranged downstream of the combustion element (2) in the flow direction of the gaseous medium, and wherein the sensor device (22, 24) detects the presence of the flame indirectly by way of a temperature difference upstream and downstream of said flame.

2. Internal combustion engine (1) according to at least one of the preceding claims, **characterized in that** the valve device (6) is a solenoid valve (6).

3. Internal combustion engine (1) according to at least one of the preceding claims, **characterized in that** the internal combustion engine (1) has at least one measuring device (26) which determines a temperature of at least one region of the combustion element (2).

4. Internal combustion engine (1) according to Claim 3, **characterized in that** the measuring device (26) measures an electrical variable.

5. Internal combustion engine (1) according to at least one of the preceding claims, **characterized in that** the internal combustion engine has a further measuring device which detects electrical loads.

6. Motor vehicle and in particular utility vehicle having an internal combustion engine according to at least one of the preceding claims.

## Revendications

1. Moteur à combustion interne (1) comprenant une pluralité d'éléments de travail et au moins une conduite d'amenée (8), laquelle amène un fluide gazeux aux éléments de travail, comprenant un élément combustible (2) disposé au moins partiellement dans la conduite d'amenée (8), lequel chauffe le fluide gazeux à amener au moins partiellement à l'aide d'une flamme, comprenant une conduite à carburant (10), laquelle amène à l'élément combustible (2) un carburant servant à faire fonctionner l'élément combustible (2), comprenant un dispositif de vanne (6) commandable, lequel commande l'amenée du carburant à l'élément combustible (2), et comprenant un dispositif de commande (12) destiné à commander le dispositif de vanne (6), le moteur à combustion interne (1) possédant au moins un dispositif détecteur (22, 24) qui vérifie une fonction de l'élément combustible (2), le dispositif détecteur (22, 24) étant configuré de telle sorte qu'il constate une présence de la flamme au niveau de l'élément combustible (2), **caractérisé en ce que** le moteur à combustion interne (1) possède un relais électronique (14) monté à demeure sur le moteur, destiné à commander le dispositif de vanne (6), le relais électronique (14), qui possède une pluralité de composants semiconducteurs (12, 16, 17), possédant comme dispositif de commande (12) un contrôleur pour la communication LIN avec un module de commande de moteur (44) servant à attaquer des étages finaux, les étages finaux étant un étage final à base de semiconducteur (16) destiné à attaquer le dispositif de vanne (6) et un étage final à base de semiconducteur (17) destiné à attaquer l'élément combustible (2), et **en ce que** le dispositif détecteur (22, 24) possède deux dispositifs de mesure de température (22, 24), un dispositif de mesure de température (22) étant disposé dans le sens de l'écoulement du fluide gazeux en amont par rapport à l'élément combustible (2) et l'autre dispositif de mesure de température (24) étant disposé dans le sens de l'écoulement du fluide gazeux en aval par rapport à l'élément combustible (2) et le dispositif détecteur (22, 24) constatant la présence de la flamme indirectement par le biais d'une différence de température avant et après ladite flamme.

2. Moteur à combustion interne (1) selon au moins l'une des revendications précédentes, **caractérisé en ce que** le dispositif de vanne (6) est une électrovanne (6).

3. Moteur à combustion interne (1) selon au moins l'une des revendications précédentes, **caractérisé en ce que** le moteur à combustion interne (1) possède au moins un dispositif de mesure (26) qui détermine une température d'au moins une zone de l'élément combustible (2).

4. Moteur à combustion interne (1) selon la revendication 3, **caractérisé en ce que** le dispositif de mesure (26) mesure une grandeur électrique.

5. Moteur à combustion interne (1) selon au moins l'une des revendications précédentes, **caractérisé en ce que** le moteur à combustion interne possède un dispositif de mesure supplémentaire, lequel détecte des charges électriques.

6. Véhicule automobile et notamment véhicule utilitaire comprenant un moteur à combustion interne selon au moins l'une des revendications précédentes.
